# EUROPÄISCHE PATENTSCHRIFT

(11) **EP 0 673 531 B1**
(45) Veröffentlichungstag und Bekanntmachung des Hinweises auf die Patenterteilung: **12.11.1997**
(21) Anmeldenummer: 94900627.4
(22) Anmeldetag: 06.12.1993
(51) Int. Cl.: G06F 17/40

(54) **EINRICHTUNG ZUR ERFASSUNG UND AUFZEICHNUNG VON AUF VERPACKTE GEGENSTÄNDE UND/ODER AUF DIE VERPACKUNG DERSELBEN WIRKENDE PHYSIKALISCHE GRÖSSEN**
ARRANGEMENT FOR DETECTING AND RECORDING PHYSICAL PARAMETERS ACTING ON PACKAGED OBJECTS AND/OR THE PACKAGES THEMSELVES
DISPOSITIF DE DETECTION ET D'ENREGISTREMENT DE PARAMETRES PHYSIQUES AGISSANT SUR DES OBJETS EMBALLES ET/OU SUR L'EMBALLAGE DESDITS OBJETS

(30) Priorität: 09.12.1992 AT 2431/92
(43) Veröffentlichungstag der Anmeldung: 27.09.1995
(73) Patentinhaber: C.S.C. Transport-Kontroll-Geräte GmbH, 80333 München (DE)
(72) Erfinder: GANSTER, Franz, A-2870 Aspang/Wechsel (AT)
(74) Vertreter: Gibler, Ferdinand, Dipl.Ing. Dr. techn.
(86) Internationale Anmeldenummer: AT9300186
(87) Internationale Veröffentlichungsnummer: WO9414133

(56) Entgegenhaltungen:
- WO-A-85/01817
- US-A- 4 862 394
- IEEE TRANSACTIONS ON INSTRUMENTATION AND MEASUREMENT Bd. 39, Nr. 6 , Dezember 1990 , NEW YORK US Seiten 894 - 897 XP000177437 F GUEUNING 'Micro Data-Loggers Lead to Two New Classes of Chips'
- PATENT ABSTRACTS OF JAPAN vol. 14, no. 516 (P-1130)13. November 1990 & JP,A,02 214 916 (MITSUTOYO)
- JOURNAL OF THE SOCIETY OF ENVIRONMENTAL ENGINEERS Nr. 53 , Juni 1972 , UK Seiten 21 - 28 D.C. ALLEN 'Maximum Drops Experienced by Packages in Transit'

## Beschreibung

Die Erfindung betrifft eine Einrichtung zur Erfassung und Aufzeichnung von auf verpackte Gegenstände und/oder auf die Verpackung derselben, beispielsweise während eines Transports, wirkende physikalische Größen, wie z.B. Beschleunigung, Gaskonzentration, Luftfeuchtigkeit, Luftdruck und/bzw. oder den Schließzustand der Verpackung od. dgl., wobei am Gegenstand und/oder an der Verpackung bzw. innerhalb der Verpackung wenigstens ein Sensor angeordnet ist, der die auf den Gegenstand und/oder die Verpackung wirkende physikalische Größe erfaßt und in ein an seinem Ausgang abgreifbares elektrisches Meßsignal umwandelt, der Sensor-Ausgang mit einem der Eingänge einer Komparatoreinheit verbunden ist, wobei an einem anderen der Eingänge ein vorbestimmbares Schwellwertsignal angelegt ist und der diesen Eingängen zugeordnete Ausgang der Komparatoreinheit bei Unterschreiten bzw. Überschreiten des Schwellwertes durch das der physikalischen Größe entsprechende Meßsignal ein Speichersignal abgibt, das Speichersignal zum Zeitpunkt der Schwellwertunter- bzw. -überschreitung das Abspeichern des Meßsignals und einer Uhrzeit- und Datumsinformation aus einer Zeit-Datumseinheit in den Speicher veranlaßt und die so aufgezeichneten Daten aus dem Speicher wieder auslesbar sind.

Durch die weltweite Verflechtung der Wirtschaft werden viele Produkte über weite Transportwege vom Hersteller zum Abnehmer verschickt. Dieses Transportgut ist, besonders wenn es sich um keine Primärrohstoffe handelt, in den meisten Fällen gegen Einflüsse, denen es während seines Transports oder während seiner Zwischenlagerung von außen ausgesetzt ist, empfindlich. Die Hersteller geben einen Bereich für verschiedene physikalische Größen vor, deren Grenzwerte nicht über- oder unterschritten werden dürfen, da sonst mit dem Verlust eines Teils oder der gesamten Transportladung gerechnet werden muß. Die oben angeführten physikalischen Größen sind keineswegs einschränkend für die Erfindung und ihre Anwendung, diese sind nur beispielhaft für alle durch Sensoren meßbare Größen angeführt.

Bedingt durch die großen Distanzen sind in der Regel eine Vielzahl von Speditionsunternehmen am Transport beteiligt. Daraus ergibt sich ein mehrmaliges Verladen und Zwischenlagern der Fracht. Dabei aber auch während des Transports kann es durch unsachgemäße Behandlung zu einer Einwirkung von verschiedenen physikalischen Größen kommen, die über oder unter den vom Erzeuger vorgeschriebenen maximal oder minimal zulässigen Grenzwerten liegen. Dies kann eine vollständige oder teilweise Beschädigung der Ladung bewirken.

Die Klärung der Verschuldensfrage ist in einem solchen Fall nur schwer oder überhaupt nicht möglich, da die während des Transports geschlossene Verpackung keine Kontrolle des Zustands der Ladung bei der Übernahme von einem Spediteur durch einen anderen zuläßt.

Die US-PS-4 862 394 offenbart eine Fallhöhenaufzeichnungseinrichtung für Transportgut mit einem dreiachsigen Accelerometer, dessen analoge Meßsignale digitalisiert und zum Referenzsignalvergleich einem digitalen Triggerschwellen-Komparator zugeführt werden, um durch Ereignisse, die einen bestimmten Schwellwert der Beschleunigung überschreiten, den Inhalt eines Verzögerungsspeichers auszulesen. Dabei werden aus diesem eine vorbestimmte Anzahl von vor und nach dem Ereignis aufgezeichneten Beschleunigungswerten zusammen mit Uhrzeit, Datum und weiteren Hilfsdaten in einen Speicher übertragen. Nach erfolgtem Transport können die so gespeicherten Daten erfaßt und die Fallhöhe des Transportgutes für jedes aufgetretene Ereignis errechnet werden.

Aus der WO 85/01817 ist eine tragbare Aufzeichnungsvorrichtung in Zusammenhang mit der Aufbewahrung und/oder dem Transport von Gütern verschiedenster Art bekanntgeworden, welche die Änderungen einer physikalischen Größe, wie etwa Temperatur, Druck, Feuchtigkeit, welcher die Vorrichtung dauernd oder fallweise ausgesetzt sein kann, automatisch aufzeichnet. Die Vorrichtung enthält eine Spannungsversorgung, eine Sensorvorrichtung zum Erfassen einer physikalischen Größe, und eine Datenspeichervorrichtung mit Zeit/Datumseinheit, die ein Aufzeichnen der physikalichen Größe über einen Zeitraum oder zu Zeitpunkten, in denen vorgegebene Werte unter- oder überschritten werden, ermöglicht. Bei Absinken der Batteriespannung wird die Vorrichtung automatisch in einen Standby-Betrieb geschaltet, in dem die gespeicherte Information beibehalten wird und die Zeit/Datumseinheit weiterläuft.

Aufgabe der Erfindung ist es, Datenfehler zu verhindern.

Erfindungsgemäß wird dies dadurch erreicht, daß eine Energieversorgungseinheit eine Überwachungseinheit und einen elektrischen Pufferaufweist, welche bei Absinken der Spannung einer Versorgungsbatterie unter einen vorbestimmbaren Wert auf eine Stützbatterie umschaltet, und eine Reset-Einheit vorgesehen ist, die Datenfehler während des Umschaltens von Versorgungsbatterie auf Stützbatterie verhindert.

Dies erlaubt es, einen empfindlichen Gegenstand mit einer erfindungsgemäßen Einrichtung und mit verschiedenen Sensoren, die die den Anforderungen entsprechenden physikalischen Größen messen können, zu versehen oder diese in seiner Verpackung anzubringen, ihn dann an seinen Bestimmungsort zu verschicken und während des Transports mit der erfindungsgemäßen Einrichtung, die die verschiedenen Schwellwerte unter- oder überschreitenden physikalischen Größen zu erfassen und aufzuzeichnen. Beim Empfänger angelangt, kann nun ein Protokoll über den Zeitpunkt und über die Höhe der Schwellwertüberschreitung abgerufen werden. Dadurch wird eine Zuordnung zu dem für einen eventuell aufgetretenen Schaden verantwortlichen Transporteur möglich.

Eine derartig vorgesehene Notversorgung durch die Stützbatterie sichert bei einem unvorgesehenen längeren Betrieb der Einrichtung oder bei fehlerhafter Versorgungsbatterie den Speicherinhalt des RAM-Bauteils.

Durch die Reset-Einheit werden Datenfehler während des Umschaltens von Versorgungsbatterie auf Stützbatterie verhindert.

Eine Ausbildung des Speichers als EEPROM-Bauteil gewährleistet selbst bei einem Totalausfall der Versorgungseinheit einen Fortbestand der Speicherinformation und ist damit besonders geeignet, hohe Datensicherheit zu garantieren.

Die Erfindung wird im folgenden anhand der Figuren beschrieben. Fig 1. zeigt eine schematische Darstellung einer erfindungsgemäßen Einrichtung; in Fig. 2 ist eine mögliche Ausführung der als interne CPU-Einheit ausgebildeten Steuereinheit abgebildet; Fig.3 zeigt eine mögliche Ausgestaltung der Versorgungs- und Reset-Einheit; Fig.4a und Fig.4b zeigen mögliche Realisierungen der Meßsignalverstärkung und Temperaturkompensation für Beschleunigungssensoren; die Fig.5, 6, 7 zeigen mögliche Ausführungsformen von Beschleunigungssensoren; in Fig.8 ist eine mögliche Ausgestaltung eines Temperatursensors und ;in Fig.9 die eines Gas-Sensors samt Meßverstärkung und Temperaturkompensation zu sehen; in Fig.10a ist eine mögliche Schaltungsvariante zur Meßwertverstärkung für einen Luftfeuchtigkeitssensor und; in Fig.10b für einen Zustandssensor dargestellt.

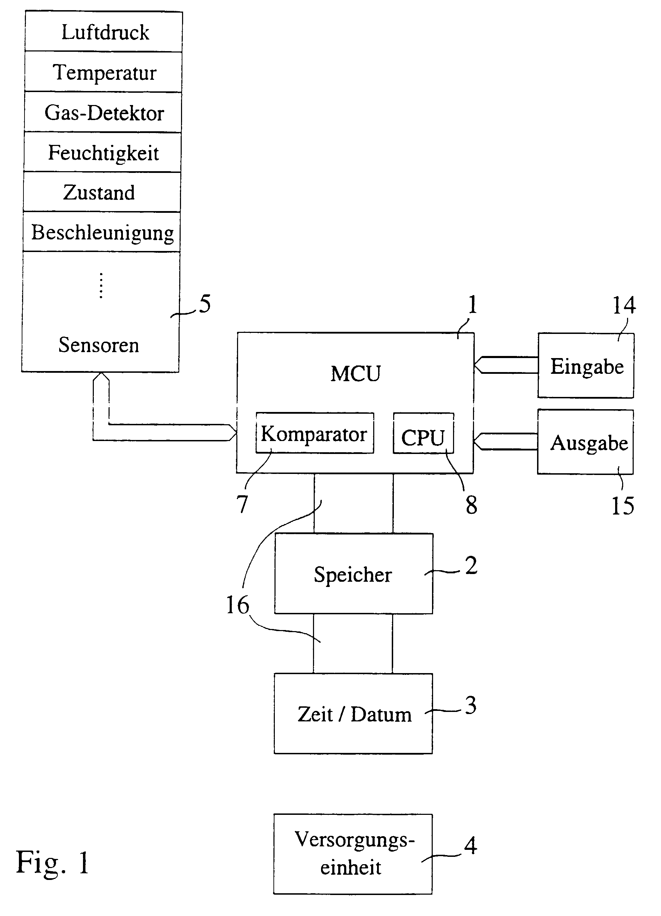

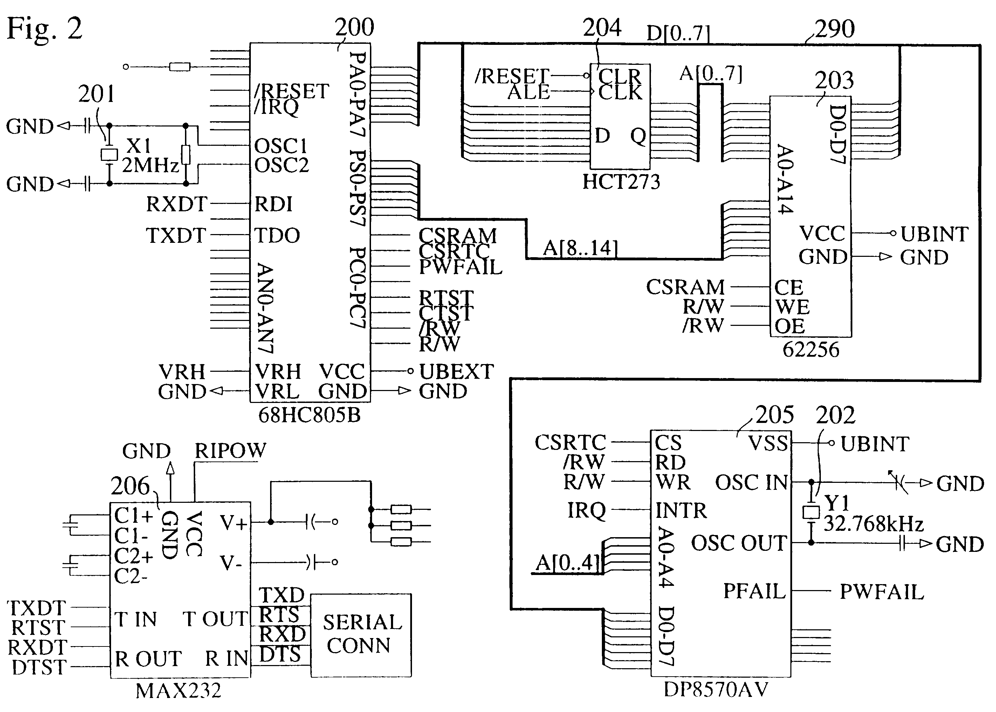

In Fig.1 ist in schematischer Darstellung die Steuereinheit 1 als eine interne CPU-Einheit ausgeführt, welche im wesentlichen aus einer CPU 8 mit Taktgenerator, einer Komparatoreinheit 7 für den Meßsignalvergleich und einem Programm besteht und in Fig.2 näher erläutert wird. Über einen internen Adreß-Datenbus 16 ist ein Speicher 2 und die Zeit-Datumseinheit 3 für den Datenaustausch mit der Steuereinheit 1 verbunden. Die Meßsensorik, die die Sensoren 5 zur Messung etwa von Beschleunigung, Temperatur, Gaskonzentration, Luftfeuchtigkeit, Zustand und Luftdruck beinhaltet, liefert ihre Meßsignale an die Steuereinheit 1. Die Erfindung ist aber nicht auf die genannten Sensoren eingeschränkt, es kann jede gewünschte meßbare Größe von entsprechenden Sensoren erfaßt werden. Weiters ist die Versorgungseinheit 4 abgebildet, die die elektrische Energie zum Betreiben der Vorrichtung liefert.

Die Fig.2 zeigt eine mögliche Ausführungsform der internen CPU-Einheit entsprechend Fig.1. Ein Mikro-Controller 200, etwa vom Typ 68HC805B, mit Takterzeugung über einen Quarzoszillator 201 hat zur Datenspeicherung einen RAM-Baustein 203 als Speicher 2 am internen Datenbus 290 angeschlossen. Über einen Zwischenspeicher 204 wird aus dem internen Bus 290 ein Adreßbus erzeugt, welcher zur Adressierung des RAM 203 dient.

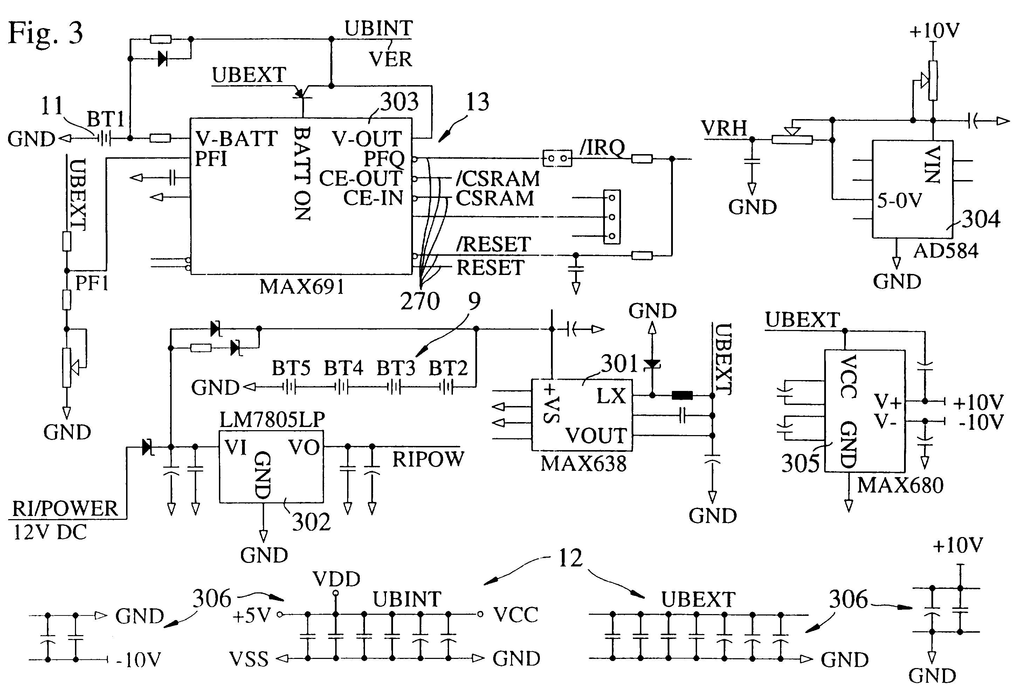

Weiters ist der Baustein 205, hier beispielsweise vom Typ 62256 mit Quarz-Zeitbasis 202 als Zeit-Datumseinheit 3 mit dem internen Datenbus 290 verbunden, deren Zeit-Datumsdaten bei Adressierung über den Mikro-Controller 200 in das RAM 203 geschrieben werden. Der RAM-Baustein 203 wird über eine in Fig.3 dargestellte gepufferte Versorgungsspannung betrieben. Der Baustein 206, etwa der Type MAX232 wird im stationären Betrieb, wenn Daten über eine serielle Schnittstelle vom Baustein 200 ein- oder ausgelesen werden, über die Versorgungsspannung RIPOW gemäß Fig.3 betrieben. Die gespeicherten Daten können mittels MIkro-Controller als Ereignisprotokoll ausgegeben werden, wobei diese aus dem RAM 203 über die serielle Schnittstelle und eine externe Ausgabeeinheit geholt werden.

Fig. 3 zeigt eine mögliche Ausführungsform der Versorgungseinheit 4, die zwei unabhängige Versorgungsspannungen UBEXT, welche der Versorgungsbatterie 9 entspricht, und UBINT, welche der Stützbatterie 11 entspricht, sowie eine Referenzspannungsquelle VRH umfaßt. Zur Versorgung des Mikro-Controllers 200 wird eine stabilisierte Versorgungsspannung UBEXT aus den in Serie geschalteten Batterien BT2-BT5 mittels eines Bausteins 301, etwa der Type MAX 638 gewonnen, wobei BT2-BT5 über den RI/Power-Eingang im stationären Betrieb mit einem Netzgerät geladen werden. Der Baustein 302 stellt bei angeschlossenem Netzgerät eine stabilisierte Spannung RIPOW für den Bauteil 206 aus Fig.2 bereit. Über den Baustein 303 etwa der Type MAX 691 (Watchdog) wird die Versorgungsspannung UBEXT an die Versorgungssleitung VER als Spannung UBINT, die den RAM 203 betreibt, weitergeleitet. Im Falle eines Absinken von UBEXT unter einen bei PFI einstellbaren Wert wird die Notversorgung durch die Stützbatterie BT1 übernommen, indem diese an die Versorgungsleitung VER geschaltet wird und der RAM 203 und der Baustein 205 (Zeit-Datumseinheit 2) weiterversorgt bleiben, während die anderen Einheiten keine Notversorgungsspannung zugeführt bekommen.

Die für die geordnete Umschaltung von UBEXT auf UBINT benötigten Steuersignale werden vom Baustein 303 geliefert. Bei Absinken der Versorgungsspannung wird die interne CPU-Einheit über den Steuerbus 270 vom bevorstehenden Stromausfall informiert, welche daraufhin eine Umschaltung von UBEXT auf UBINT bewirkt. Die elektrische Pufferung 12 während der Umschaltzeit wird durch die Stützkondensatoren 306 gewährleistet.

Im stationären Betrieb wird die Stützbatterie BTI über diesen Steuerbus 270 geladen. Mit Hilfe des Bausteins 303 und des Steuerbusses 270 wird auch die Reseteinheit (13) verwirklicht, indem während des Umschaltens von UBEXT auf UBINT Speichereintragungen unterdrückt werden.

Des weiteren wird zur Versorgung der Sensorik-Schaltkreise aus UBEXT eine +-10V-Spannung durch den Baustein 305, etwa der Type MAX680 geschaffen, wobei die +10V-Spannung durch den Baustein 304, etwa der Type AD584 stablisiert und als Analog-Referenzspannung VRH für den Mikro-Controller 200 bereitgestellt wird.

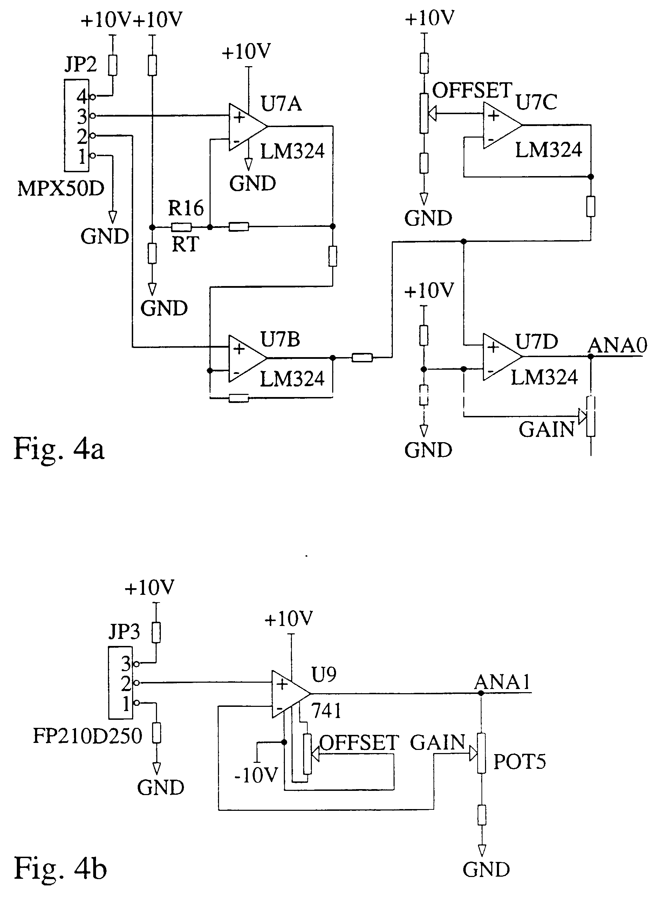

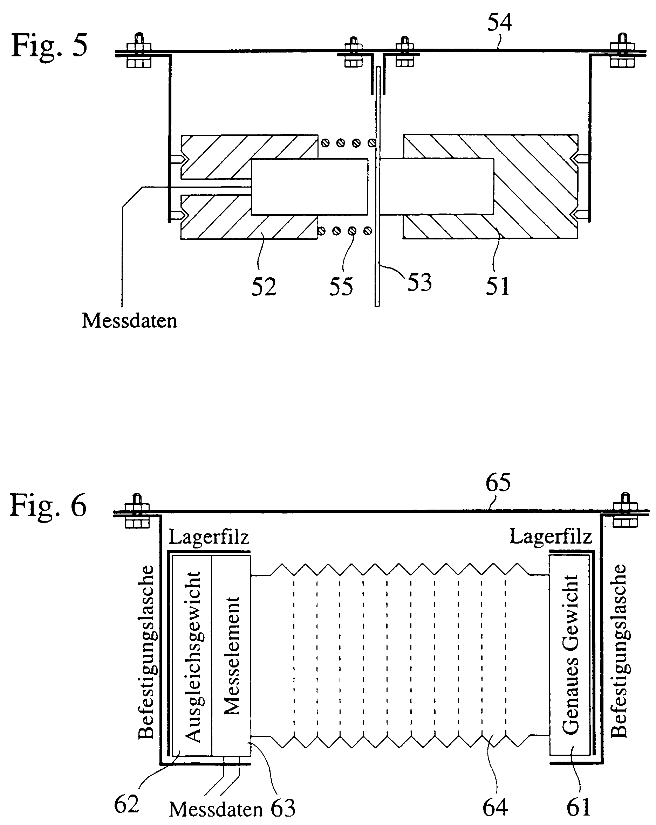

In Fig.4a ist eine Schaltung zur Verstärkung und Temperaturkompensierung der von einem Drucksensor gelieferten Meßsignale. Der Drucksensor JP2 wird dabei wie in Abb. 6 für die Messung der Beschleunigung eingesetzt. Das Innere des Drucksensors JP2 besteht aus vier in einer Vollbrückenschaltung angeordneten druckabhängigen Widerständen, auf die über eine Membran gedrückt wird. Die Diagonalspannung an den Ausgängen 2,3 des Sensors JP2 wird über den Operationsverstärker U7A verstärkt und dabei der Temperaturgang von JP2 durch den Widerstand RT kompensiert und mit U7B weiterverstärkt. Der Spannungsfolger U7C stellt die Offsetspannung für die weitere Verstärkungsstufe U7D zur Verfügung. In Fig. 4b ist eine Schaltung zur Verstärkung der Meßsignale aus den Sensorausgängen einer Feldsonde, wie sie in Fig.5 Verwendung findet oder der einer Wägezelle wie sie in Fig.6 als Meßelement eingesetzt wird, abgebildet. Das Meßsignal wird über den nichtinvertierenden Eingang des Operationsverstärkers U9 verstärkt, die Verstärkung wird mit dem Potentiometer POT5 eingestellt. Die in Fig.4a und 4b bezeichneten Ausgänge ANA sind mit den Eingängen der Komparatoreinheit 7 verbunden, die in Fig.2 im Mikro-Controller 200 integriert ist.

Der Beschleunigungssensor kann in einer Vielzahl von Varianten ausgeführt sein, wobei eine davon in Fig.5 dargestellt ist. Eine Masse 52 ist eine von zwei in einer Achse bewegbaren Massen 51, 52, welche über eine Feder 55 mit einem Anker 53 aus Federstahl verbunden ist, während die zweite Masse 51 direkt am Anker 53 befestigt ist. Bei Beschleunigen in einer der beiden Richtungen enlang dieser Achse verändert eine der Massen 51, 52 die Lage des Ankers, der gelenkig mit einer Gehäusewand 54 (Verpackung) verbunden ist. Die Abstandsänderung wird über eine magnetische Feldsonde gemessen und ist proportional der wirkenden Beschleunigung. Das Meßsignal kann gemäß Fig.4b verstärkt werden.

In Fig.6 ist eine weitere Ausführungsform eines Beschleunigungssensors dargestellt. Ein an einer Gehäusewand befestigter Rahmen beinhaltet zwei gleichgroße, bewegbare Massen 61, 62 , die von einem flüssigkeitsgefüllten Gummibalg 64 auseinandergehalten werden, wobei zwischen der Masse 62 und der Flüssigkeit ein Meßelement 63, wie beispielsweise Wägezelle, Drucksensor oder Kraftmeßdose angebracht ist. Bei Beschleunigung in der einen Richtung drückt entweder die Masse 61 über die Flüssigkeit gegen das Meßelement 63, während bei Beschleunigung in der entgegesetzten Richtung das Meßelement 63 mit der Masse 62 gegen die Flüssigkeit gedrückt wird. In beiden Fällen wird ein der Größe der Beschleunigung proportionales Meßsignal im Meßelement erzeugt, das entsprechend Fig. 4a und Fig. 4b verstärkt werden kann. Für eine Messung der Beschleunigung mit den vorstehend beschriebenen Sensoren in einer beliebigen Richtung im Raum , müssen in jeder der drei kartesischen Koordinatenachsen ein ein Sensor angebracht sein und die Meßwerte aus Vektoraddition gebildet werden.

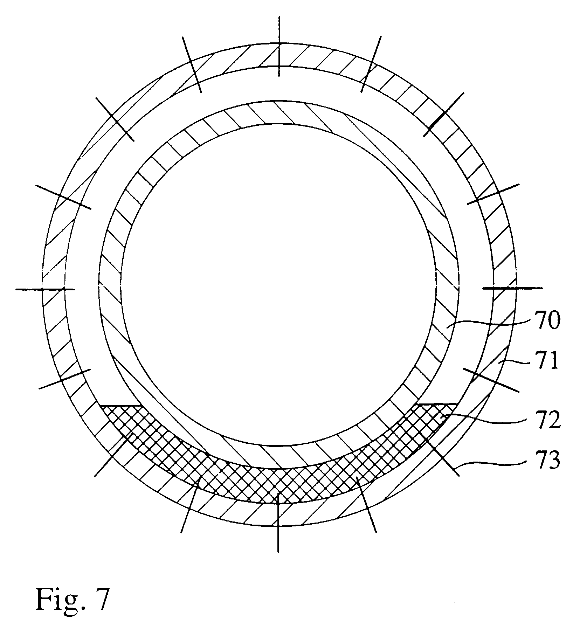

Fig.7 zeigt einen Schnitt durch eine weitere Ausführungsform eines Beschleunigungssensors. Eine mit einer leitenden Flüssigkeit 72 gefüllte Hohlkugel 71 aus isolierendem Material umschließt eine kleinere konzentrisch angebrachte Hohlkugel oder Kugel 70 aus dem gleichen Material, sodaß die Flüssigkeit 72 in einer Kugelschale eingeschlossen ist. Die Hohlkugel 71 hat über ihre gesamte Oberfläche eine Vielzahl von äquidistant zueinander angeordnete, durch ihre Wand hindurchgehenden elektrischen Kontakte 73 verteilt, die mit der Flüssigkeit in Berührung kommen können. Es wird nun über eine rechnergesteuerte Widerstandsmessung zwischen einem Referenzkontakt und allen anderen Kontakten die Lage der Flüssigkeitsoberfläche relativ zu ihrer Ausgangslage bestimmt und daraus die Größe der Beschleunigung ermittelt.

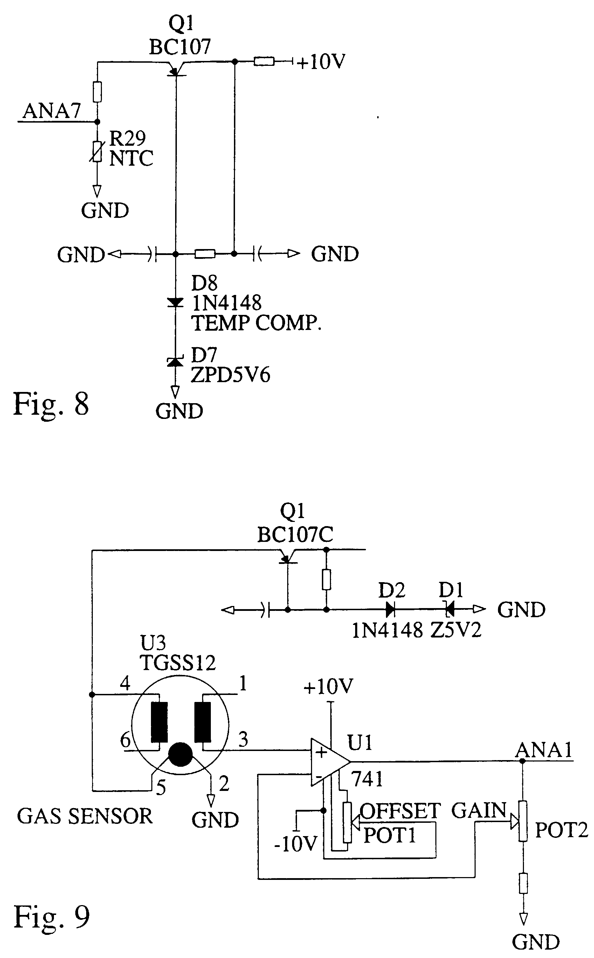

In Fig.8 ist eine mögliche Ausführungsform eines Temperatursensors mit einem NTC-Widerstand R29, der im Emitterkreis eines Transistors O1 angeordnet ist, dargestellt. Eine Zenerdiode D7 und eine Diode D8 steuern die Basis von O1 mit einer konstanten temperaturkompensierten Spannung an. Dadurch ist die Ausgangsspannung ANA7 unabhängig vom Eigen-Temperaturgang der Schaltung proportional zur Änderung des Widerstands von R29 aufgrund der Temperatur, der er als Sensorelement ausgesetzt ist. Die Spannung ANA7 ist die Eingangsspannung für eine der Eingänge der Komparatoreinheit 7. Die vorstehend beschriebene Ausführung schränkt aber die Erfindung nicht ein, ein Temperatursensor kann auch mittels passiver oder aktiver Halbleiterelemente realisiert werden.

Fig.9 zeigt eine Ausführungsform eines Gas-Sensors wieder wie in Fig.8 mit temperaturkompensierter Spannung aus einer Zenerdiode Dl und einer Diode D2 über einen Transistor Q1 verstärkt zum Betreiben des Sensorelements U3, hier eine offene Röhre, deren Röhrenstrom proportional zur Gaskonzentration eines bestimmten Gases ist, wobei die Verstärkung des Meßsignals wieder über einen Operationsverstärker U1, dessen Verstärkung mit einem Potentiometer POT2 einstellbar ist, erfolgt.

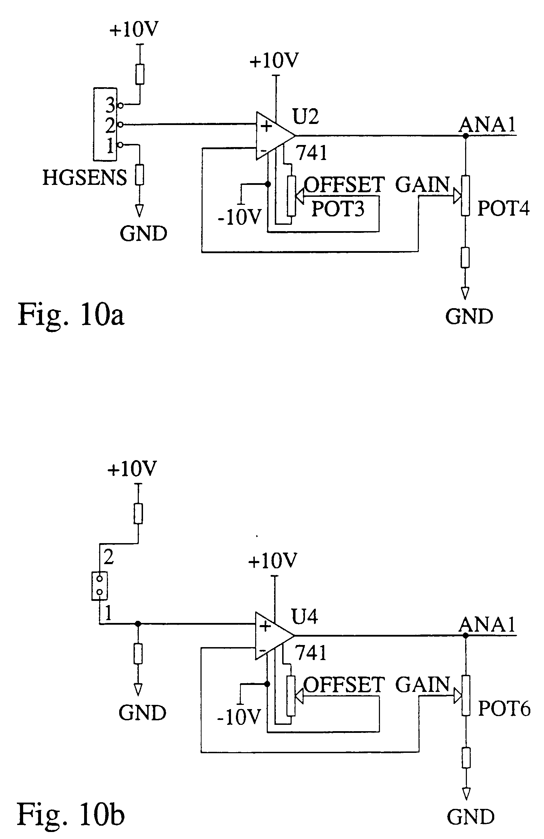

In Fig.10a ist eine Schaltung zur Verstärkung des Meßsignals eines Feuchtigkeitssensorselements JP1 über den nichtinvertierenden Eingang des Operationsverstärkers U2 abgebildet, wobei die Verstärkung mittels eines Potentiometers POT4 eingestellt werden kann und die Ausgangsspannung ANA1 an einem der Eingänge der Komparatoreinheit 7 liegt. Das Sensorelement JP1 ist dabei als feuchtigkeitsabhängiger Oberflächenwiderstand ausgeführt.

In Fig.10b ist eine Ausführungsform eines Zustandsensors mit Verstärkungseinheit wie in Fig.10b wiedergegeben, wobei das Sensorelement aus einem auf der Verpackungsinnenseite aufgetragenem Leitlack oder aus einem an der Innenseite des Verpackungsdeckels angebrachten Drahtkontakt bestehen kann.

## Patentansprüche

1. Einrichtung zur Erfassung und Aufzeichnung von auf verpackte Gegenstände und/oder auf die Verpackung derselben, beispielsweise während eines Transports, wirkende physikalische Größen, wie z.B. Beschleunigung, Gaskonzentration, Luftfeuchtigkeit Luftdruck und/bzw. oder den Schließzustand der Verpackung od. dgl., wobei am Gegenstand und/oder an der Verpackung bzw. innerhalb der Verpackung wenigstens ein Sensor (5) angeordnet ist, der die auf den Gegenstand und/oder die Verpackung wirkende physikalische Größe erfaßt und in ein an seinem Ausgang abgreifbares elektrisches Meßsignal umwandelt, der Sensor-Ausgang mit einem der Eingänge einer Komparatoreinheit (7) verbunden ist, wobei an einem anderen der Eingänge ein vorbestimmbares Schwellwertsignal angelegt ist und der diesen Eingängen zugeordnete Ausgang der Komparatoreinheit bei Unterschreiten bzw. Überschreiten des Schwellwertes durch das der physikalischen Größe entsprechende Meßsignal ein Speichersignal abgibt, das Speichersignal zum Zeitpunkt der Schwellwertunter- bzw. -überschreitung das Abspeichern des Meßsignals und einer Uhrzeit- und Datumsinformation aus einer Zeit-Datumseinheit (3) in den Speicher (2) veranlaßt und die so aufgezeichneten Daten aus dem Speicher (2) wieder auslesbar sind, **dadurch gekennzeichnet**, daß eine Energieversorgungseinheit (4) eine Überwachungseinheit (10) und einen elektrischen Puffer (12) aufweist, welche bei Absinken der Spannung einer Versorgungsbatterie (9) unter einen vorbestimmbaren Wert auf eine Stützbatterie (11) umschaltet, und eine Reset-Einheit (13) vorgesehen ist, die Datenfehler während des Umschaltens von Versorgungsbatterie auf Stützbatterie verhindert.

## Claims

1. An arrangement for detecting and recording physical parameters acting on packaged objects and/or the packages themselves, for example during their transport, such as acceleration, gas concentration, air humidity, air pressure, state of closing of the package, or the like, while at least one sensor (5) arranged on the object and/or on or inside the package detects physical parameters acting on the object and/or the package and converts them into electric measurement signals emitted at its output, the sensor output is connected to one of the outputs of a comparator unit, whereas a predeterminable threshold value signal is applied to one of the other outputs and, when the measurement signal corresponding to the physical parameter falls below or exceeds the threshold value, the output of the comparator unit associated to said inputs emits a storage signal which corresponds to the physical parameter, the storage signal causes the measurement signal which fell below or exceeded the threshold value to be stored in the memory (2), together with time and data information supplied by a time- and date-keeping unit (3) and the thus recorded data may be read in the memory (2), **characterized in that** a power supply unit (4) exhibits a watchdog unit (10) and an electrical standby unit (12), switching over to a back-up battery (11) when voltage of a supply battery (9) falls below a predeterminable value, and provision is made for a reset unit (13), which inhibits data errors during switch-over from the supply battery to the back-up battery.

## Revendications

1. Dispositif de saisie et enregistrement de grandeurs physiques agissant sur des objets emballés et/ou de leurs emballages, par exemple lors d'un transport, comme par exemple la vitesse, la concentration de gaz, l'humidité de l'air, la pression atmosphérique et/respectivement ou l'état terminé de l'emballage ou autres, dans lequel sur l'objet et/ou sur l'emballage ou à l'intérieur de l'emballage est placé au moins un capteur (5) qui saisit les grandeurs physiques agissant sur l'objet et les convertit en un signal de mesure électrique disponible à sa sortie, la sortie du capteur est reliée à l'une des entrées d'un comparateur (7) auquel, à une autre des entrées, est appliqué un signal de valeur de seuil prédéterminable et qui, lorsque le signal de mesure correspondant aux grandeurs physiques franchit à la descente ou à la montée la valeur de seuil, fournit un signal de mémorisation à cette sortie du comparateur correspondant aux entrées, le signal de mémorisation provoque, à l'instant du franchissement à la descente ou à la montée, la mémorisation, dans la mémoire (2), du signal de mesure et d'une information de temps et de date provenant d'une unité temps-date (3) et les données ainsi enregistrées sont accessibles dans la mémoire (2), caractérisé par le fait qu'une unité de fourniture d'énergie (4), comportant une unité de surveillance (10) et un tampon électrique (12), commute sur une batterie de secours (11) en cas de baisse de la tension d'une batterie d'alimentation (9) au-dessous d'une valeur prédéterminée et il est prévu une unité de réinitialisation (13) qui empêche une perte des données lors de la commutation de la batterie d'alimentation à la batterie de secours.
